# EUROPEAN PATENT SPECIFICATION

(11) **EP 2 724 627 B1**
(45) Date of publication and mention of the grant of the patent: **03.08.2016**
(21) Application number: 12805270.1
(22) Date of filing: 08.06.2012
(51) Int. Cl.: A23L 2/00, C12G 3/04, A23L 2/54, A23L 2/68

(54) **METHOD FOR IMPROVING AFTERTASTE OF CARBONATED BEVERAGE**
VERFAHREN ZUR VERBESSERUNG DES NACHGESCHMACKS EINES KOHLENSÄUREHALTIGEN GETRÄNKS
PROCÉDÉ D'AMÉLIORATION DE L'ARRIÈRE-GOÛT D'UNE BOISSON GAZEUSE

(30) Priority: 27.06.2011 JP 2011142128
(43) Date of publication of application: 30.04.2014
(73) Proprietor: Suntory Beverage & Food Limited, Chuo-ku, Tokyo 104-0031 (JP)
(72) Inventor: FUJIKI, Yuriko, Kawasaki-shi Kanagawa 211-0067 (JP); KOMINE, Tetsuya, Kawasaki-shi Kanagawa 211-0067 (JP); WAKAMIYA, Ken, Kawasaki-shi Kanagawa 211-0067 (JP)
(74) Representative: Vossius & Partner Patentanwälte Rechtsanwälte mbB
(86) International application number: PCT/JP2012/064739
(87) International publication number: WO 2013/002007

(56) References cited:
- WO-A1-01/72144
- WO-A1-03/105610
- WO-A1-2007/078293
- WO-A1-2010/035869
- WO-A1-2010/035869
- JP-A- 2007 117 063
- JP-A- 2009 274 981
- US-A- 5 417 994
- TONOGAI, Y. ET AL.: 'Rapid Determination of Ortho- and Polyphosphates in Soft Drinks' JOURNAL OF FOOD PROTECTION vol. 44, no. 11, 1981, pages 835 - 838, XP008171899

## Description

### TECHNICAL FIELD

The present invention relates to the improvement of the aftertaste of carbonated drinks, carbonated drinks with improved aftertaste, and processes for producing such carbonated drinks. The invention further relates to the production of alcoholic beverages by diluting distilled liquors such as whiskey with the carbonated drinks, and also to the thus produced alcoholic beverages that are improved in aftertaste while retaining the refreshing feeling of the ingredient flavor.

### BACKGROUND ART

Carbonated drinks will impart a refreshing coolness but at the same time they also have acidity and astringency that impair their aftertaste. Conventional carbonated drinks use sugars and high-intensity sweeteners to mask these undesired tastes. However, sugar-free and trace-sugar carbonated drinks do not have this masking effect, so depending on who drink them, the acidity or astringency perceived may exceed the allowable limit.

Various methods have been proposed as ways to improve the palatability of those carbonated drinks. Patent Document 1 discloses that it is known to mitigate the stimulus of carbon dioxide gas and provide a more round taste by incorporating condensed phosphates; however, no details are given about this approach. Patent Document 2 discloses that particular amounts of condensed phosphates incorporated in carbonated drinks under high gas pressure will contribute to producing creamy foam and, what is more, the document teaches that the undesirably lingering aftertaste due to the use of high-intensity sweeteners is improved by the synergism between the high gas pressure and the condensed phosphate.

Sugar-free and trace-sugar carbonated drinks are sometimes used to prepare carbon dioxide containing alcoholic beverages including products commonly called "Hai-ball" (highball) and "Chu-hai" (shochu-based spirits). In this case, too, some people may perceive higher levels of acidity or astringency than the allowable limit, so it has been proposed that the bitterness and *umami* of green tea be utilized to mask these undesirable tastes (Patent Document 3) or that carbon dioxide be contained at pressures as low as 0.1 to less than 0.5 kg/cm² in terms of gage pressure at 20°C (Patent Document 4.).

Patent document 5 relates to a beverage composition comprising: at least one nutritive sweetener, acesulfame potassium and aspartame, said acesulfame potassium and aspartame being present in an equivalent sucrose sweetness ratio of acesulfame potassium to aspartame of from about 0.35 to about 0.70; about 8% to about 12% juice by volume of the total composition; and a calorie content of from about 25 to 70 calories per 8 ounces of the beverage composition.

Patent document 6 describes the use of polyphosphate, being a phosphate polymer wherein the number of phosphate groups (n) is at least 3, as a tooth erosion inhibitor in the manufacture of an orally administrable acidic composition.

### CITATION LIST

### PATENT LITERATAURE

Patent Document 1: JP 2002-330735 A
Patent Document 2: WO 2010/035869 A1
Patent Document 3: JP Hei 6-237693 A
Patent Document 4: Japanese Patent 2529072
Patent Document 5: WO 2007/078293 A1
Patent Document 6: WO 01/72144 A1

### SUMMARY OF INVENTION

### TECHNICAL PROBLEM

As described above, there have been studied various methods to improve the acidity and astringency of carbonated drinks but they still involve several problems to solve.

Take, for example, the technology disclosed in Patent Document 2 which uses high-intensity sweeteners, it is not clear whether the undesired aftertaste can be improved even if the drink is free of sugars or flavorings or if it contains only small amounts of sweeteners such as sugar or high-intensity sweetener and/or flavorings.

Even Patent Documents 3 and 4 still involve a problem concerning the aftertaste of alcoholic beverages prepared from sugar-free or trace-sugar carbonated drinks.

An object of the present invention is to provide carbonated drinks having an improved aftertaste, and alcoholic beverages having an improved aftertaste that are prepared from such carbonated drinks.

### SOLUTION TO PROBLEM

The present inventors conducted intensive studies with a view to solving the aforementioned problems and surprisingly found that the aftertaste of carbonated drinks could be improved by incorporating a condensed phosphate and phosphoric acid in specified proportions. The inventors also found that by mixing such carbonated drinks with distilled liquors, there could be obtained alcoholic beverages having a good aftertaste that had not been possessed by conventional products. These findings have led to the accomplishment of the present invention.

Hence, the present invention relates to the following.
1. A carbonated drink comprising at least one condensed phosphate and phosphoric acid, wherein the ratio of the total weight of the condensed phosphate to the weight of the phosphoric acid is within the range of from 1:0.08 to 1:0.20.
2. The carbonated drink as recited in 1, which has a hardness of from 20 to 200 mg/L.
3. The carbonated drink as recited in 1 or 2, which is of a sugar-free or trace-sugar type.
4. The carbonated drink as recited in any one of 1 to 3, wherein the total content of a sweetness component is no more than 15 wt%.
5. The carbonated drink as recited in any one of 1 to 4, which contains a flavor component.
6. The carbonated drink as recited in any one of 1 to 5, which has a carbon dioxide pressure of from 2.5 to 4.5 kg/cm³.
7. An alcoholic beverage obtained by mixing the carbonated drink as recited in any one of 1 to 6 with distilled liquor.
8. A process for producing a carbonated drink, comprising adjusting the ratio of the total weight of a condensed phosphate to the weight of phosphoric acid in the carbonated drink to lie within the range of from 1:0.08 to 1:0.20.
9. A process for producing an alcoholic beverage, comprising mixing distilled liquor with the carbonated drink as recited in any one of 1 to 6.
10. A method for improving the aftertaste of a carbonated drink, comprising adjusting the ratio of the total weight of a condensed phosphate to the weight of phosphoric acid in the carbonated drink to lie within the range of from 1:0.08 to 1:0.20.

### ADVANTAGEOUS EFFECTS OF INVENTION

The carbonated drink of the present invention is mitigated in the problems of acidity and astringency of conventional carbonated drinks and thus has an improved aftertaste. As a result, consumers can fully enjoy the stimulating feeling, light flavor, and refreshing coolness of carbonated drinks. In addition, carbon dioxide-containing alcoholic beverages as prepared from the carbonated drink of the present invention also have a good aftertaste that has not been possessed by conventional product and can be drunk with good palatability.

### DESCRIPTION OF EMBODIMENTS

### (Condensed phosphate)

The term "condensed phosphate" as used herein collectively refers to polyphosphates, metaphosphates, and ultraphosphates. "Polyphosphates" here mentioned refers to condensed phosphates having a linear structure, and acidic phosphates corresponding thereto. Polyphosphates include pyrophosphates (which are sometimes called diphosphates). The term "metaphosphates" as used herein refers, except in special cases, to condensed phosphates having a cyclic or an extremely long linear structure, and acidic phosphates corresponding thereto. Extremely long linear polyphosphates are sometimes called metaphosphates or polymetaphosphates. The term "ultraphosphates" as used herein refers to phosphates having such a structure that linear and cyclic condensed phosphates are jointed together.

The condensed phosphates that can be used in the present invention are not particularly limited as long as they are acceptable for use in foods and examples include sodium pyrophosphate (also known as sodium diphosphate and may be a hydrate or anhydride (as exemplified by sodium diphosphate decahydrate and tetrasodium pyrophosphate (anhydride)), acidic sodium pyrophosphate (also known as disodium dihydrogenpyrophosphate), potassium pyrophosphate (also known as tetrapotassium pyrophosphate), sodium tripolyphosphate (also known as sodium triphosphate), sodium polyphosphate, potassium polyphosphate, sodium trimetaphosphate, sodium tetrametaphosphate, sodium pentametaphospahte, sodium hexametaphosphate (also known as sodium metaphosphate, in such documents as the Japanese Standards of Food Additives), acidic sodium metaphosphate (also known as sodium hydrogenmetaphosphate), acidic sodium hexametaphosphate, sodium ultraphosphate, potassium metaphosphate, and mixtures of any of these phosphates. In the present invention, at least one condensed phosphate is used.

The total concentration of the condensed phosphate in the carbonated drink of the present invention typically ranges from 50 to 700 ppm, preferably from 100 to 600 ppm, on a weight basis.

### (Phosphoric acid)

- The term "phosphoric acid" as used herein refers to orthophosphoric acid and does not include phosphoric acid species that are in the group of other similar compounds having a phosphate backbone (such as polyphosphoric acid and pyrophosphoric acid).

The concentration of phosphoric acid in the carbonated drink of the present invention typically ranges from 20 to 70 ppm, preferably from 25 to 60 ppm, on a weight basis.

It is important for the present invention that the condensed phosphate and phosphoric acid be contained in the carbonated drink at a particular ratio. Specifically, the ratio of the total weight of the condensed phosphate to the weight of the phosphoric acid in the carbonated drink is within the range from 1:0.08 to 1:0.20.

### (Hardness)

"Hardness" is an index for the contents of magnesium and calcium ions in water as expressed in terms of the amount of calcium carbonate (mg/L). Hardness may be measured by any known method, but typically by the EDTA method.

The aftertaste of the carbonated drink of the present invention can be improved depending on its hardness. The hardness of the carbonated drink is preferably from 20 to 200 mg/L, more preferably from 50 to 100 mg/L.

### (Sweetness component)

The carbonated drink of the present invention has its aftertaste improved by the combination of the condensed phosphate and phosphoric acid, so it has no need to use sugars or high-intensity sweeteners to mask the acidity and astringency of carbon dioxide. Therefore, the effects of the present invention are particularly significant in drinks that do not contain large amounts of a sweetness component.

Examples of such drinks include sugar-free or trace-sugar drinks, as well as drinks having low contents of a sweetness component. It should be mentioned here that the Health Promotion Law has labeling rules for "sugars" specified based on the amount of sugars per 100 mL. According to those rules, a drink may be labeled "sugar-free" if its sugar content is less than 0.5 g per 100 mL and "trace-sugar" or "low-sugar" if the sugar content is no more than 2.5 g per 100 mL. The terms "trace-sugar" and "sugar-free" as used herein have the definitions that comply with this provision.

The total content of the sweetness component is preferably not more than 15 wt%. Examples of the sweetness component include: sugars such as sucrose, glucose, fructose, liquid sugars such as high-fructose corn syrup, starch syrup, reduced starch syrup, honey, and oligosaccharides such as isomaltooligosaccharide and lacto-fructooligosaccharide; sugar alcohols such as sorbitol, maltitol, mannitol, erythritol, and xylitol; and high-intensity sweeteners such as α-glucosyl transferase-treated stevia, Aspartame, Acesulfame potassium, Alitame, saccharin, saccharin sodium, cyclamate, stevia extract, stevia powder, Sucralose, thaumatin, and neotame. Note that the "high-intensity sweeteners" as used herein refers, except in special cases, to sweeteners that are so much sweeter than sucrose as to provide adequate sweetness in small enough amounts.

### (Flavor component)

The carbonated drink of the present invention may have a flavor component added in order to impart a desired flavor. Even in the case of mixing the carbonated drink with distilled liquor, the imparted flavor can be effective. The flavor component to be incorporated in the present invention can be selected from among fruit flavorings and plant flavorings which may be used either independently or in admixture of two or more species. Fruit flavorings are flavorings derived from fruits. Various fruit flavorings may be used, as exemplified by citrus flavorings including a lemon flavor, an orange flavor, a lime flavor, and a grapefruit flavor, and various other flavorings such as an apple flavor, a grape flavor, a raspberry flavor, a cranberry flavor, a cherry flavor, and a pineapple flavor. These fruit flavorings may be extracted from natural sources such as fruits and essential oils, or alternatively, they may be synthesized.

The term "plant flavorings" collectively refers to flavorings obtained from other plants than fruits and include: flavors originating from the seeds of plants as exemplified by cola, guarana, and coffee; flavors originating from the rhizomes of plants such as ginger, sassafras, and Sarsaparilla; and flavors originating from herbs and spices such as chamomile, elder flower, lemon balm, lavender, clove, garlic capsicum, pepper, mustard, *Zanthoxylum piperitum, Wasabia,* laurel, thyme, sage, nutmeg, mace, cardamom, caraway, anise, basil, fennel, cumin, turmeric, paprika, saffron, bay leaves, majoram, oregano, rosemary, tarragon, coriander, and dill. Such plant flavorings may be exemplified by spice-based flavors (such as a cola flavor, and a ginger ale flavor), tea flavors, etc. These plant flavorings may be extracted from natural sources or alternatively, they may be synthesized.

The flavor component may be added in amounts that can be set as appropriate for its intensity and the preference for the desired drink; typically, it is added in amounts of about 0.1 to 0.3 wt% of the total weight of the carbonated drink.

### (Carbon dioxide)

The carbon dioxide in the carbonated drink of the present invention can be introduced by any conventional method, such as forcing in carbon dioxide, mixing with carbonated water or any other liquid that is preliminarily processed to contain carbon dioxide, or fermentation as in the brewing of beer. Except in special cases, the term "gas pressure" as used herein refers to the gas pressure within the container of the carbonated drink. Pressure measurement can be performed by any method that is well known to skilled artisans, for example, a method comprising the steps of adjusting a sample at 20°C, holding it in position in an internal gas pressure gage, opening the stopcock at the internal gas pressure gage to let out the gas, closing the stopcock so that the indicator on the internal gas pressure gage will swing, and reading the value at which the indicator comes to standstill; alternatively, a commercial internal gas pressured gage (say, the gas volume analyzer GVA-500A of KYOTO ELECTRONICS MANUFACTURING CO., LTD.) may be employed. The amount of carbon dioxide in the carbonated drink of the present invention can be expressed in terms of gas pressure (kgf/cm² or MPa) or gas volume (g/kg or w/w%) at 20°C. Gas pressure can be converted to gas volume or vice versa, depending on the case.

The gas pressure of the carbonated drink of the present invention is not particularly limited but it is preferably from 2.5 to 4.5 kg/cm², more preferably from 3.0 to 4.0 kg/cm², and most preferably at 3.5 kg/cm².

### (Other components)

The carbonated drink of the present invention may have other components added thereto as long as they will not be deleterious to the effects of the present invention. Such optional components are exemplified by antioxidants, flavorings, inorganic acids, inorganic acid salts, inorganic salts, pigments, preservatives, seasonings (flavorings), sweeteners, acidulants, pH modifiers, and quality stabilizers.

### (Production of the carbonated drink, and improvement of its aftertaste)

The carbonated drink of the present invention can be produced by an ordinary method known to skilled artisans. In this method of production, it is important to make such an adjustment that the ratio of the total weight of the condensed phosphate to the weight of the phosphoric acid in the carbonated drink obtained should be within the range from 1:0.05 to 1:0.5, preferably from 1:0.08 to 1:0.20, and this adjustment helps the obtained carbonated drink feature an improved aftertaste. If necessary, the carbonated drink of the present invention may preferably be adjusted to have a hardness of from 20 to 200 mg/L, more preferably from 50 to 100 mg/L. Adjustments for attaining the values indicated above may be performed in any of the production steps involved.

### (Alcoholic beverages obtained by mixing the carbonated drink with distilled liquor)

The carbonated drink of the present invention described on the foregoing pages may be mixed with distilled liquor to produce alcoholic beverages. The alcoholic beverages thus obtained feature not only an improved aftertaste of carbon dioxide but also a good quality of aftertaste that has not been possessed by conventional products.

The distilled liquor that can be used in the present invention is not particularly limited. Examples include whiskeys (such as whiskey and brandy), spirits (e.g. gin, vodka, ram, tequila and other spirits, as well as alcohol as a starting material), liqueurs, and *shochu* (both continuously distilled *shochu* and single distilled *shochu*); these types of distilled liquor may be used either independently or in combination of two or more species. Whiskeys are particularly preferred.

The amounts of the respective components in the alcoholic beverage obtained by mixing the carbonated drink with distilled liquor and the hardness of that alcoholic beverage depend on the carbonated drink used as the base material; typically, the alcoholic beverage of interest has a hardness of from 2 to 180 mg/L, a condensed phosphate content of from 4.5 to 640 ppm on a weight basis, and a phosphoric acid content of from 2 to 64 ppm on a weight basis.

The mixing ratio of the carbonated drink to the distilled liquor is not particularly limited but preferably ranges from 1:10 to 10:1 on a volume basis.

### (Packaged drink and beverage)

The carbonated drink of the present invention and the alcoholic beverage prepared from the same can be marketed as packaged drinks and beverages. Packages may be ordinary types including glass bottles, PET bottles, metal cans, and so on.

### EXAMPLES

On the following pages, the present invention is described by reference to examples, to which the invention is by no means limited.

### (Example 1)

### Lemon-flavored, sugar-free carbonated drink

To commercial carbonated soda contained in 500-mL PET bottle (SUNTORY SODA), 150 mg of condensed phosphate and/or 25 mg of phosphoric acid as well as 0.5 mL of a lemon flavor (product of Ogawa & Co., Ltd.) were added to prepare samples of a lemon-flavored, sugar-free carbonated drink (see Table 1). The gas pressure within each sample was measured to be 3.5 kg/cm². All samples had a measured hardness of 100 mg/L.

The prepared samples were subjected to a sensory test by four trained panelists, who evaluated the sharpness of aftertaste (i.e., acidity and astringency) on the following criteria: 1, excellent; 2, very good; 3, good. The scores given by the panelists were averaged by four and the results were assigned to the following groups: particularly advantageous (⊚) when the average score was 1.5 and below; advantageous (○) when it was less than 2.5; and ordinary (Δ) at 2.5 and above. The results are shown in Table 2.

[Table 1]

**Table 1 Recipe**

| | |
|---|---|
| Ingredients | |
| SUNTORY SODA | 500 mL |
| Lemon flavor | 0.5 mL |
| (Polyphosphate | 150 mg) |
| (Phosphoric acid | 25 mg) |

[Table 2]

**Table 2**

| | 1 | 2 | 3 | 4 |
|---|---|---|---|---|
| Polyphosphate | 0 | 300 | 0 | 300 |
| Phosphoric acid | 0 | 0 | 50 | 50 |
| Comments | Slightly weak taste of lemon | Preferred because taste of lemon peel was distinct | Sharp acidity sensed intensely | Further preferred because taste of lemon peel was distinct and sharpness of aftertaste was good |
| Rating | Δ | ○ | Δ | ⊚ |

| | | | | |
|---|---|---|---|---|
| (unit: ppm on weight basis) | | | | |

Although it contained only a small amount of flavoring in the absence of a sweetener, the carbonated drink prepared in accordance with the present invention which contained a polyphosphate and phosphoric acid had a good aftertaste and received a particularly preferred rating.

### (Example 2)

### Whiskey highball made from lemon-flavored, sugar-free carbonated drink

Each of the samples of lemon-flavored, sugar-free carbonated drink prepared in Example 1 was mixed with a commercial whiskey (SUNTORY KAKUBIN) at a ratio of 4:1 and the products were subjected to a sensory test as in Example 1 (Table 3). They had a measured hardness of 80 mg/L. The contents of polyphosphate and phosphoric acid indicated in Table 3 were calculated for the respective components in the carbonated drink as the base.

[Table 3]

**Table 3**

| | 1 | 2 | 3 | 4 |
|---|---|---|---|---|
| Polyphosphate | 0 | 300 | 0 | 300 |
| Phosphoric acid | 0 | 0 | 50 | 50 |
| Comments | Taste of lemon dominated by whiskey | Lemon was perceived distinctly | Acidity was perceived more intensely than carbon dioxide alone | Further preferred because lemon was perceived distinctly and sharpness of aftertaste was also good |
| Rating | Δ | ○ | Δ | ⊚ |

| | | | | |
|---|---|---|---|---|
| (unit: ppm on weight basis) | | | | |

The alcoholic beverage prepared from the carbonated drink of the present invention containing both polyphosphate and phosphoric acid received a particularly preferred rating since it not only gave a good aftertaste from carbon dioxide but also allowed the lemon flavor to be perceived distinctly.

### (Example 3)

### Ginger ale-flavored, sugar-containing carbonated drink

To commercial carbonated soda contained in 500-mL PET bottle (SUNTORY SODA), 150 mg of condensed phosphate and/or 25 mg of phosphoric acid, as well as 0.75 mL of a ginger ale flavor (product of Ogawa & Co., Ltd.), 60 g of high-fructose corn syrup, 1 g of citric acid, 0.15 g of trisodium citrate, and 0.1 g of caramel were added to prepare samples of a ginger ale-flavored, sugar-containing carbonated drink (see Table 4). The gas pressure within each sample was measured to be 3.5 kg/cm². All samples had a measured hardness of 100 mg/L. The total content of the sweetness component in each sample was about 10.7 wt%.

A sensory test was performed as in Example 1 and the results are shown in Table 5.

[Table 4]

**Table 4 Recipe**

| Ingredients | |
|---|---|
| SUNTORY SODA | 500 mL |
| High-fructose corn syrup | 60 g |
| Citric acid | 1 g |
| Trisodium citrate | 0.15 g |
| Caramel | 0.1 g |
| Ginger ale flavor | 0.75 mL |
| (Polyphosphate | 150 mg) |
| (Phosphoric acid | 25 mg) |

[Table 5]

**Table 5**

| | 1 | 2 | 3 | 4 |
|---|---|---|---|---|
| Polyphosphate | 0 | 300 | 0 | 300 |
| Phosphoric acid | 0 | 0 | 50 | 50 |
| Comments | Preferred | Preferred | Sharp acidity sensed intensely | Further preferred because sharpness of aftertaste was good |
| Rating | ○ | ○ | Δ | ⊚ |

| | | | | |
|---|---|---|---|---|
| (unit: ppm on weight basis) | | | | |

Although it contained only small amounts of a sweetener and flavorings, the carbonated drink prepared in accordance with the present invention which contained a polyphosphate and phosphoric acid had a good aftertaste and received a particularly preferred rating.

### (Example 4)

### Samples of sugar-free carbonated drink with various levels of hardness

Sodium chloride and magnesium sulfate were dissolved in pure water to prepare samples of mineral water with a hardness of 0, 50, and 150 mg/L, in which carbon dioxide was dissolved to prepare samples of sugar-free carbonated water with a gas pressure of 3.5 kg/cm³. To these samples of sugar-free carbonated water and commercial sugar-free carbonated water (SUNTORY SODA) with a hardness of 100 mg/L, 150 mg of a condensed phosphate and/or 25 mg of phosphoric acid were added (see Table 6) and the products were subjected to a sensory test as in Example 1. The results are shown in Table 7.

[Table 6]

**Table 6 Recipe**

| Ingredients | |
|---|---|
| Sugar-free carbonated water | 500 mL |
| (Polyphosphate | 150 mg) |
| (Phosphoric acid | 25 mg) |

[Table 7]

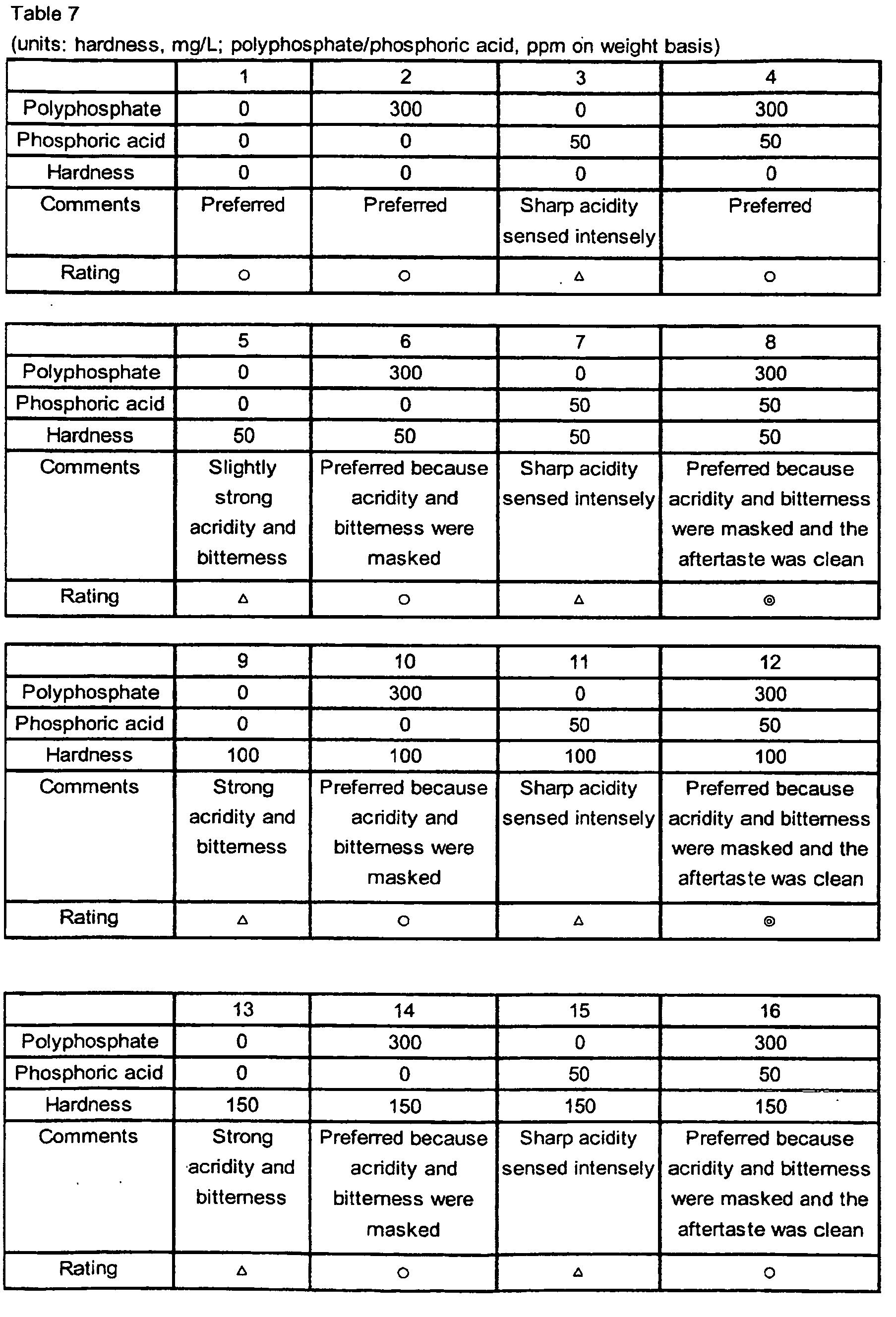

Although they contained neither sweetener nor flavoring, the samples of carbonated drink prepared in accordance with the present invention which contained a polyphosphate and phosphoric acid had a good aftertaste and received a particularly preferred rating. This effect was noticeable when the hardness was higher than zero and was particularly high at a hardness of from 50 to 100.

### (Example 5)

### Samples of whiskey highball made from sugar-free carbonated drink with various levels of hardness

The samples of sugar-free carbonated drink prepared in Example 4 were mixed with commercial whiskey (SUNTORY KAKUBIN) at a ratio of 4:1 and the products were subjected to a sensory test as in Example 1 (Table 8). The contents of polyphosphate and phosphoric acid indicated in Table 8 were calculated for the respective components in the carbonated drink as the base.

[Table 8]

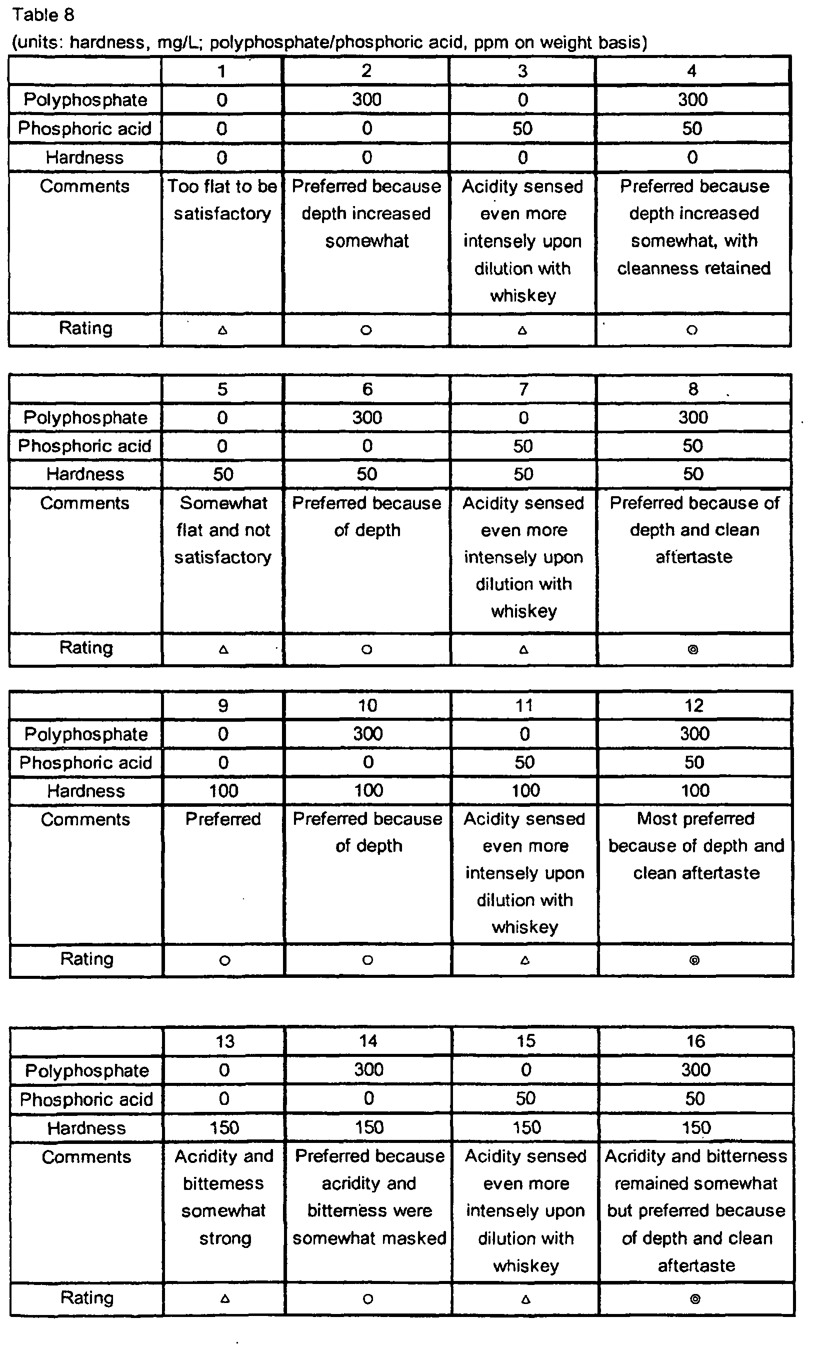

The samples of whiskey highball exhibited a similar tendency to the carbonated drink serving as the base. In addition, the beverage samples made from the carbonated drink of the present invention containing both a polyphosphate and phosphoric acid were not only improved in aftertaste but also given depth to their taste.

## Claims

1. A carbonated drink comprising at least one condensed phosphate and phosphoric acid, wherein the ratio of the total weight of the condensed phosphate to the weight of the phosphoric acid is within the range of from 1:0.08 to 1:0.20.

2. The carbonated drink according to claim 1, which has a hardness of from 20 to 200 mg/L.

3. The carbonated drink according to claim 1 or 2, which is of a sugar-free or trace-sugar type.

4. The carbonated drink according to any one of claims 1 to 3, wherein the total content of a sweetness component is no more than 15 wt%.

5. The carbonated drink according to any one of claims 1 to 4, which contains a flavor component.

6. The carbonated drink according to any one of claims 1 to 5, which has a carbon dioxide pressure of from 2.5 to 4.5 kg/cm³.

7. An alcoholic beverage obtained by mixing the carbonated drink according to any one of claims 1 to 6 with distilled liquor.

8. A process for producing a carbonated drink, comprising adjusting the ratio of the total weight of a condensed phosphate to the weight of phosphoric acid in the carbonated drink to lie within the range of from 1:0.08 to 1:0.20.

9. A process for producing an alcoholic beverage, comprising mixing distilled liquor with the carbonated drink according to any one of claims 1 to 6.

10. A method for improving the aftertaste of a carbonated drink, comprising adjusting the ratio of the total weight of a condensed phosphate to the weight of phosphoric acid in the carbonated drink to lie within the range of from 1:0.08 to 1:0.20.

## Patentansprüche

1. Ein kohlensäurehaltiges Getränk, umfassend mindestens ein kondensiertes Phosphat und Phosphorsäure, wobei das Verhältnis des Gesamtgewichts des kondensierten Phosphats zu dem Gewicht der Phosphorsäure im Bereich von 1:0,08 bis 1:0,20 liegt.

2. Das kohlensäurehaltige Getränke nach Anspruch 1, das eine Härte von 20 bis 200 mg/L aufweist.

3. Das kohlensäurehaltige Getränk nach Anspruch 1 oder 2, das zuckerfrei ist oder Spuren von Zucker aufweist.

4. Das kohlensäurehaltige Getränk nach einem der Ansprüche 1 bis 3, wobei der Gesamtgehalt an Süßungskomponente nicht mehr als 15 Gew.-% beträgt.

5. Das kohlensäurehaltige Getränk nach einem der Ansprüche 1 bis 4, das eine Aromakomponente enthält.

6. Das kohlensäurehaltige Getränk nach einem der Ansprüche 1 bis 5, das einen Kohlendioxiddruck von 2,5 bis 4,5 kg/cm³ aufweist.

7. Ein alkoholisches Getränk, erhalten durch Mischen des kohlensäurehaltigen Getränks nach einem der Ansprüche 1 bis 6 mit destilliertem Alkohol.

8. Ein Verfahren zur Herstellung eines kohlensäurehaltigen Getränks, umfassend das Einstellen des Verhältnisses des Gesamtgewichts eines kondensierten Phosphats zu dem Gewicht von Phosphorsäure in dem kohlensäurehaltigen Getränk, so dass es im Bereich von 1:0,08 bis 1:0,20 liegt.

9. Ein Verfahren zur Herstellung eines alkoholischen Getränks, umfassend das Mischen von destilliertem Alkohol mit dem kohlensäurehaltigen Getränk nach einem der Ansprüche 1 bis 6.

10. Ein Verfahren zur Verbesserung des Nachgeschmacks eines kohlensäurehaltigen Getränks, umfassend das Einstellen des Verhältnisses des Gesamtgewichts eines kondensierten Phosphats zu dem Gewicht von Phosphorsäure in dem kohlensäurehaltigen Getränk, so dass es im Bereich von 1:0,08 bis 1:0,20 liegt.

## Revendications

1. Boisson gazeuse comprenant au moins un phosphate condensé et de l'acide phosphorique, dans lequel le rapport du poids total du phosphate condensé sur le poids de l'acide phosphorique se situe dans une plage comprise entre 1 : 0,08 et 1 : 0,20.

2. Boisson gazeuse selon la revendication 1, qui présente une dureté comprise entre 20 mg / l et 200 mg / l.

3. Boisson gazeuse selon la revendication 1 ou la revendication 2, qui est du type sans sucre ou à trace de sucre.

4. Boisson gazeuse selon l'une quelconque des revendications 1 à 3, dans laquelle la teneur totale d'un composant de sucrosité n'est pas supérieure à 15 % en poids.

5. Boisson gazeuse selon l'une quelconque des revendications 1 à 4, qui contient un composant de goût.

6. Boisson gazeuse selon l'une quelconque des revendications 1 à 5, qui présente une pression de dioxyde de carbone comprise entre 2,5 kg / cm³ et 4,5 kg / cm³ .

7. Boisson alcoolisée obtenue en mélangeant la boisson gazeuse selon l'une quelconque des revendications 1 à 6, avec un alcool distillé.

8. Procédé destiné à produire une boisson gazeuse, comprenant une étape consistant à régler le rapport du poids total d'un phosphate condensé sur le poids d'acide phosphorique dans la boisson gazeuse, de façon à ce qu'il se situe à l'intérieur d'une plage comprise entre 1 : 0,08 et 1 : 0,20.

9. Procédé destiné à produire une boisson alcoolisée, comprenant une étape consistant à mélanger un alcool distillé avec la boisson gazeuse selon l'une quelconque des revendications 1 à 6.

10. Procédé destiné à améliorer l'arrière-goût d'une boisson gazeuse, comprenant une étape consistant à régler le rapport du poids total d'un phosphate condensé sur le poids d'acide phosphorique dans la boisson gazeuse, de façon à ce qu'il se situe à l'intérieur d'une plage comprise entre 1 : 0,08 et 1 : 0,20.
